# EUROPÄISCHE PATENTSCHRIFT

(11) **EP 2 931 761 B1**
(45) Veröffentlichungstag und Bekanntmachung des Hinweises auf die Patenterteilung: **04.03.2020**
(21) Anmeldenummer: 13798681.6
(22) Anmeldetag: 03.12.2013
(51) Int. Cl.: C08F 8/50, C08F 8/06, C08F 10/00, C08K 5/14, C08L 23/26, B29C 48/285, B29C 48/25, B29C 48/295, B29C 48/53, B29C 48/535, B29C 48/76

(54) **VERFAHREN ZUR DEGRADIERUNG VON (CO)POLYMEREN IN EINEM EXTRUDER SOWIE EXTRUDER ZUR DURCHFÜHRUNG DES VERFAHRENS**
PROCESS FOR DEGRADING (CO)POLYMERS IN AN EXTRUDER AND EXTRUDER FOR CARRYING OUT THE PROCESS
PROCÉDÉ POUR LA DÉGRADATION DE (CO)POLYMÈRES DANS UNE EXTRUDEUSE ET EXTRUDEUSE POUR LA MISE EN OEUVRE DE CE PROCÉDÉ

(30) Priorität: 12.12.2012 DE 102012222991
(43) Veröffentlichungstag der Anmeldung: 21.10.2015
(73) Patentinhaber: Henkel AG & Co. KGaA, 40589 Düsseldorf (DE)
(72) Erfinder: KASPER, Dirk, 40597 Düsseldorf (DE); BRENGER, Andreas, 40221 Düsseldorf (DE); THIERBACH, Ilja, 40878 Ratingen (DE)
(86) Internationale Anmeldenummer: PCT/EP2013/075303
(87) Internationale Veröffentlichungsnummer: WO 2014/090628

(56) Entgegenhaltungen:
- EP-A1- 1 767 333
- WO-A1-2006/023213
- WO-A1-2012/013699
- US-A- 3 940 379

## Beschreibung

Die vorliegende Erfindung betrifft ein Verfahren zur Degradierung von (Co)polymeren in einem Extruder, sowie einen zur Durchführung des Verfahrens geeigneten Extruder.

Die Degradierung von (Co)polymeren mit Hilfe von Extrudern ist hinlänglich bekannt. Durch die Einwirkung von Scherkräften bei hohen Temperaturen kann aufgrund der entstehenden thermomechanischen Beanspruchung das Molekulargewicht von (Co)polymeren gezielt reduziert bzw. abgebaut werden. Eine weitere Effizienzsteigerung des Abbauprozesses ist möglich, wenn der genannte Prozess in Gegenwart von Radikalbildnern, wie beispielsweise Peroxiden durchgeführt wird.

In diesem Zusammenhang beschreibt die DE 4000695 C2 beispielsweise ein Verfahren zur Herstellung weitgehend amorpher Poly-alpha-olefine, die ausgehend von höhermolekularen amorphen Poly-alpha-olefinen durch Scherbeanspruchung oberhalb des Erweichungspunktes in Gegenwart eines Radikalbildners hergestellt werden, wobei die Schmelzviskosität der höhermolekularen amorphen Poly-alpha-olefine um mindestens die Hälfte erniedrigt wird. Die so hergestellten amorphen Poly-alpha-olefine können in Teppichschwerbeschichtungsmassen oder Schmelzklebstoffen verwendet werden. Als geeignete Radikalbildner werden beispielsweise Peroxide offenbart.

Als nachteilig am oben genannten Verfahren hat sich erwiesen, dass hohe Sicherheitsanforderungen zu erfüllen sind, da verschiedene Radikalbildner, wie etwa Peroxide, ein hohes Gefährdungspotentials aufweisen. Weiterhin werden beim Zerfall von Peroxiden flüchtige Bestandteile freigesetzt, die zu einem unerwünschten Aufschäumen des degradierten Polymers im Extruder führen können. Darüber hinaus führt der Einsatz größerer Mengen an Peroxiden oft zu einer Unwirtschaftlichkeit des Verfahrens, da diese Stoffe einen hohen Kostenanteil an den Gesamtkosten des Verfahrens ausmachen.

Neben Peroxiden können auch Sauerstoff oder sauerstoffhaltige Gase zur Degradierung von Polymeren in einem Extruder verwendet werden. Die DE 4413093 A1 offenbart beispielsweise ein Verfahren zur Herstellung funktionalisierter, niedermolekularer Polymere aus Altkunststoffen, in dem hochmolekulare Kunststoffe bei Temperaturen von 300°C bis 410°C in Anwesenheit von Sauerstoff oder sauerstoffhaltigen Gasen unter Molekulargewichtsreduktion abgebaut werden.

Aufgrund des schwer zu kontrollierenden effektiven Sauerstoffeintrags in die Polymerschmelze, ist die Reproduzierbarkeit des o.g. Verfahrens problematisch. Auch ist es bei der alleinigen Verwendung von Sauerstoff oder eines sauerstoffhaltigen Gasen selbst bei sehr hohen Temperaturen nicht in jedem Fall möglich, den Degradierungsprozess so effektiv zu gestalten, dass Polymere mit niedrigen Viskositäten erhalten werden.

Ziel der vorliegenden Erfindung war daher die Bereitstellung eines Verfahrens, das es ermöglicht, zumindest einige der beschriebenen Nachteile aus dem Stand der Technik zu überwinden. Insbesondere sollte das Verfahren erlauben, in einem kostengünstigen, energieeffizienten und möglichst sicheren Prozess degradierte (Co)polymere mit niedrigen Viskositäten herzustellen, wobei vorzugsweise eine unerwünschte bzw. unkontrollierte Schäumung der erhaltenen (Co)polymere weitestgehend vermieden wird.

Die vorliegende Aufgabe wird durch die erfindungsgemäßen Verfahren, sowie durch die zur Durchführung der genannten Verfahren geeigneten Extruder gelöst.

Das erfindungsgemäße Verfahren beruht auf der sequentiellen Degradierung von (Co)polymeren in einem Extruder, wobei in einem ersten Extrusionsabschnitt eine Degradierung des eingesetzten (Co)polymers durch Einwirkung mindestens eines Radikalbildners erfolgt, während in einem zweiten Extruderabschnitt ein weiterer Abbau des (Co)polymers mittels eines Sauerstoffgases erreicht wird.

Das erfindungsgemäße Verfahren zur Degradierung von (Co)polymeren in einem Extruder umfasst die folgenden Schritte:
a) Zuführung eines (Co)polymers mittels einer Beschickungsöffnung in einen ersten Extrusionsabschnitt des Extruders;
b) Degradierung des (Co)polymers unter Scherbeanspruchung im ersten Extrusionsabschnitt in Gegenwart mindestens eines Radikalbildners zur Herstellung eines ersten degradierten (Co)polymers;
c) Überführung des ersten degradierten (Co)polymers von dem ersten Extrusionsabschnitt in einen zweiten Extrusionsabschnitt des Extruders, wobei der erste Extrusionsabschnitt von dem zweiten Extrusionsabschnitt durch ein Dichtmittel abgetrennt ist;
d) Zuführung von Sauerstoffgas mittels einer Zuführöffnung in den zweiten Extrusionsabschnitt, wobei die Zuführöffnung in Extrusionsrichtung hinter dem Dichtmittel angeordnet ist; und
e) Weitere Degradierung des ersten degradierten Copolymers unter Scherbeanspruchung im zweiten Extrusionsabschnitt in Gegenwart eines Sauerstoffgases zur Herstellung eines zweiten degradierten (Co)polymers;
mit der Maßgabe, dass das Dichtmittel geeignet ist, das Entweichen des Sauerstoffgases aus der Beschickungsöffnung zu verhindern.

Dieses erfindungsgemäße Verfahren wird im Folgenden auch als erstes erfindungsgemäßes Verfahren bezeichnet.

Ein zur Durchführung des beschriebenen Verfahrens geeigneter Extruder ist ein weiterer Gegenstand der vorliegenden Erfindung. Der erfindungsgemäße Extruder zur Degradierung von (Co)polymeren umfasst:
- einen Extrusionsraum enthaltend mindestens zwei Extrusionsabschnitte;
- eine Beschickungsöffnung zur Beschickung des ersten Extrusionsabschnittes mit zumindest einem (Co)polymer;
- gegebenenfalls ein Radikalbildnerzugabemittel zur Zugabe eines Radikalbildners in den ersten Extrusionsabschnitt;
- eine Zuführöffnung zur Zugabe eines Sauerstoffgases in den zweiten Extrusionsabschnitt;
- ein den ersten Extrusionsabschnitt vom zweiten Extrusionsabschnitt trennendes Dichtmittel, das zwischen der Beschickungsöffnung und der Zuführöffnung vorgesehen ist, wobei das Dichtmittel geeignet ist, das Entweichen des zugeführten Sauerstoffgases aus der Beschickungsöffnung zu verhindern; und
- gegebenenfalls ein in Extrusionsrichtung gesehen hinter der Zuführöffnung angeordnetes Abbaumittel zum Abbauen des Sauerstoffgases.

Unter einem "(Co)polymer" wird im Sinne der vorliegenden Erfindung sowohl ein Homopolymer als auch ein Copolymer verstanden, wobei der Begriff auch Mischungen verschiedener Homo- und Copolymere, sowie Mischungen aus Homo- und Copolymeren beinhaltet. Geeignete (Co)polymere sind beispielsweise Polypropylenhomopolymere oder Copolymere von Propylen mit anderen Comonomeren, wie etwa Ethylen und/oder C₄ bis C₂₀ alpha-Olefinen.

Unter dem Begriff "Extruder" können im Sinne der vorliegenden Erfindung vorzugsweise sowohl Einschnecken-, als auch Doppelschneckenextruder verstanden werden. Letztgenannte sind technisch aufwändiger und werden in unterschiedlichen Bauformen angeboten. Man unterscheidet dabei insbesondere zwischen gleich- oder gegenlaufenden, dichtkämmenden oder tangierenden, längs bzw. quer offenen oder geschlossenen und zylindrischen oder konischen Bauarten. Auch können Compounder, Expansionsextruder, oder Planetenextruder eingesetzt werden. Bevorzugt kommt zumindest ein Doppelschneckenextruder für das erfindungsgemäße Verfahren zum Einsatz.

Ein zum Einsatz kommender Extruder kann ferner ein Gehäuse mit einer Zuführseite und einer Abgabeseite umfassen, in dem wenigstens eine Schnecke drehbar gelagert sein kann, von deren Schneckenkern ein beispielsweise schraubenlinienförmig verlaufender Steg absteht. Das Gehäuse kann auf der Zuführseite wenigstens eine Zuführöffnung für die im Extruder zu verarbeitenden (Co)polymere aufweisen, sowie optional ein oder mehrere Beschickungsöffnungen für Additive, Zusatz- und/oder Hilfsstoffe und kann, vorzugsweise zumindest in der Nähe der Abgabeseite, wenigstens eine Entgasungsöffnung aufweisen, an der beispielsweise ein Vakuum angelegt werden kann, insbesondere um flüchtige Bestandteile des (Co)polymers abzusaugen.

Das Gehäuse, insbesondere die Laufbüchse für eine oder mehrere Extruderschnecken ist vorzugsweise zumindest bereichsweise beheizbar und/oder kühlbar, um die Temperatur des (Co)polymers zu beeinflussen. Zusätzlich oder alternativ ist es denkbar, eine Schnecke selbst mit einer Durchflussmöglichkeit für eine Wärmeaustauschflüssigkeit auszustatten. Der Extruder kann somit ein oder mehrere Temperaturzonen umfassen. Vorzugsweise weist der Extruder eine Mehrzahl unterschiedlicher Temperaturzonen auf, wobei die Temperatur selbiger unabhängig voneinander regelbar ist.

Ein zum Einsatz kommender Extruder kann ferner mehrere Extruderzonen umfassen. Unter einer Extruderzone werden im Sinne der vorliegenden Erfindung Funktionszonen des Extruders verstanden, wie beispielsweise eine Einzugszone, in der das zu verarbeitende (Co)polymer beispielsweise über einen Trichter an der Zuführöffnung in den Extruder eingefüllt und beispielsweise durch eine oder mehrere Extruderschnecken weiterbefördert wird; eine Plastifizierungszone oder Kompressionszone, insbesondere zum Aufschmelzen oder Plastifizieren des (Co)polymer oder eine Degradierungszone oder Hochtemperaturzone. Ein anderes Beispiel für eine zum Einsatz kommende Extruderzone ist eine Mischzone, eine Entgasungszone oder eine Austrag- bzw. Meteringzone, in der beispielsweise eine Schmelze des (Co)polymer auf die gewünschte Verarbeitungstemperatur gebracht und homogenisiert werden kann.

Der Extruder umfasst weiter zumindest zwei Extrusionsabschnitte. Unter einem Extrusionsabschnitt wird im Sinne der vorliegenden Erfindung ein Funktionsabschnitt beliebiger Ausgestaltung und Größe verstanden, der mehrere Extruderzonen beinhalten kann, wobei in einem ersten Extrusionsabschnitt vorzugsweise eine thermomechanische Degradierung des über die Zuführöffnung eingebrachten (Co)polymers erfolgt und in dem zweiten Extrusionsabschnitt eine weitere Degradierung des ersten degradierten (Co)polymers vorzugsweise unter Scherbeanspruchung in Gegenwart eines Sauerstoffgases zur Herstellung eines zweiten degradierten (Co)polymers, wobei das der erste Extrusionsabschnitt von dem zweiten Extrusionsabschnitt durch ein Dichtmittel abgetrennt ist

Als Dichtmittel kann dabei insbesondere eine Staustufe innerhalb des Extrusionsraums zum Einsatz kommen. Selbige dient der Verringerung des Durchsatzes oder des Durchtrittes des im ersten Extrusionsabschnitt degradierten (Co)polymers. Hierfür können insbesondere Stauelemente vorgesehen werden, die einen gedrosselten Durchsatz oder Durchtritt des im ersten Extrusionsabschnitt degradierten (Co)polymers vor dem Erreichen des zweiten Extrusionsabschnittes ermöglichen. Dies können insbesondere ein kleinerer Querschnitt des Extrusionsraums zur Verringerung des Durchtrittsraumes, einen größeren Querschnitt der Extruderschnecke(n) zur Verringerung des Durchtrittsraumes oder auch eine Kombination aus beiden Merkmalen sein, die eine Stauung des im ersten Extrusionsabschnitt degradierten (Co)polymers und dadurch eine Dichtwirkung zu ermöglichen können. Zudem ist auch zusätzlich oder alternativ eine derartige Gestaltung der Extruderschnecke(n) denkbar, dass die Fördergeschwindigkeit des im ersten Extrusionsabschnitt degradierten (Co)polymers innerhalb des Extrusionsraumes derart minimiert wird, dass eine Stauung dieses degradierten (Co)polymers und dadurch eine Dichtwirkung ermöglicht werden kann. Auch sind Rückförderelemente oder Rückförderbereiche, insbesondere durch besondere Ausbildung der Extruderschnecke(n) denkbar, die durch Aufstauung der Schmelze und/oder des Extrudats, also des (Co)polymers, eine Abdichtung ermöglichen. Das erfindungsgemäße Dichtmittel ist dabei ausgebildet, dass das in den zweiten Extrusionsabschnitt eingebrachte Sauerstoffgas nicht in den ersten Extrusionsabschnitt gelangt und vorzugsweise ein Entweichen des Sauerstoffgases aus der Beschickungsöffnung verhindert werden kann.

Selbstverständlich können weitere Extrusionsabschnitte vorgesehen werden, insbesondere können zwischen beiden genannten Extrusionsabschnitten weitere Extrusionsabschnitte vorgesehen werden. Optional kann sich zumindest ein weiterer Extrusionsabschnitt an den beschriebenen zweiten Extrusionsabschnitt anfügen. Erfindungsgemäß ist es denkbar, dass beide und gegebenenfalls weitere Extrusionsabschnitte innerhalb eines Extruders bereitgestellt werden. Alternativ ist es jedoch auch denkbar, dass für jeden zum Einsatz kommenden Extrusionsabschnitt ein gesonderter Extruder vorgesehen wird. Bevorzugt kommt jedoch nur ein Extruder für beide Extrusionsabschnitte zum Einsatz, da dieser Aufbau beispielsweise eine höhere Wirtschaftlichkeit aufweisen kann. Die höhere Wirtschaftlichkeit gegenüber einer Ausführungsform mit zwei Extrudern resultiert insbesondere aus dem geringeren Platzbedarf und den niedrigeren Wartungskosten für den Antrieb der Extruderschnecken.

Unter dem Begriff "Degradierung" wird im Sinne der vorliegenden Erfindung der im Extruder unter Wärmeeinwirkung und Scherbeanspruchung stattfindende Polymerkettenverkürzende und Molekulargewichts-reduzierende Abbauprozess des (Co)polymers verstanden.

Unter einem "degradierten (Co)polymer" wird im Sinne der vorliegenden Erfindung ein Polymer verstanden, das, ausgehend vom eingesetzten (Co)polymer, durch Degradierung in einem Extruder hergestellt wird. Dabei ist das unter vergleichbaren Bedingungen bestimmte gewichtsmittlere Molekulargewicht (M_{w}) des ersten degradierten (Co)polymers stets kleiner als das gewichtsmittlere Molekulargewicht (M_{w}) des eingesetzten (Co)polymers und das gewichtsmittlere Molekulargewicht (M_{w}) des zweiten degradierten (Co)polymers ist stets kleiner als das gewichtsmittlere Molekulargewicht (M_{w}) des ersten degradierten (Co)polymers.

Unter einem "Radikalbildner" wird im Sinne der vorliegenden Erfindung eine Substanz verstanden, die durch äußere Einwirkung, wie beispielsweise Wärme und/oder Strahlung, in Radikale zerfällt.

Das im erfindungsgemäßen Verfahren verwendete (Co)polymer kann beispielsweise aus Polypropylencopolymeren ausgewählt werden. Geeignete Polypropylencopolymere enthalten in polymerisierter Form neben Propylen mindestens ein weiteres Comonomer, das vorzugsweise ausgewählt wird aus Ethylen und/oder C₄ bis C₂₀ alpha-Olefinen. Bevorzugte C₄ bis C₂₀ alpha-Olefine umfassen Buten, Penten, Hexen, Hepten, Octen, Nonen, Decen, Dodecen, 4-Methyl-1-penten, 3,5,5-Trimethyl-1-hexen, und 5-Ethyl-1-nonen. In einer Ausführungsform der Erfindung werden als Polypropylencopolymer Terpolymere auf Basis von Propylen, Ethylen und C₄ bis C₂₀ alpha-Olefinen verwendet.

Beispielsweise können im erfindungsgemäßen Verfahren als (Co)polymere auch Polymermischungen aus Polypropylen(co)polymeren und EPR-Kautschuken und/oder EPDM-Kautschuken eingesetzt werden.

Der Begriff "EPR-Kautschuk" bezieht sich im Sinne der vorliegenden Erfindung auf elastomere Copolymere von Ethylen und Propylen, wobei die genannten Polymere gegebenenfalls mit funktionalen Monomeren und/oder funktionellen Gruppen modifiziert sind.

Der Begriff "EPDM-Kautschuk" bezieht sich auf elastomere Terpolymere, die Propylen, Ethylen und mindestens ein Dien umfassen, wobei das Dien beispielsweise ausgewählt wird aus 1,4-Hexadien, Norbornadien, Ethyliden-Norbornen, Dicyclopentadien, Butadien und Isopren. Die genannten Terpolymere können gegebenenfalls mit weiteren funktionalen Monomeren und/oder funktionellen Gruppen modifiziert sein.

EPR-und EPDM-Kautschuke sind beispielsweise kommerziell von Exxon Chemical Company unter dem Handelsnamen Vistalon® und von DMS Polymers, Inc., unter dem Handelsnamen Kelton® erhältlich. Funktional modifizierte EPDM-Kautschuke, die Anhydridgruppen enthalten, werden unter dem Handelsnamen Exxelor® von Exxon Chemical Company vertrieben.

Die beschriebene Polymermischung kann beispielsweise durch mechanisches Vermischen von mindestens einem EPR/EPDM-Kautschuk mit mindestens einem Polypropylen(co)polymer hergestellt werden. Alternativ dazu kann die vorgenannte Polymermischung in Form einer Polymerlegierung auch in situ durch stufenweise Polymerisation in einem Einzelreaktor oder einer Reihe von Parallelreaktoren hergestellt werden. Ein Beispiel für eine solche in situ-Herstellung ist das von Montell North America Inc. entwickelte Catalloy Verfahren. Mit Hilfe des Catalloy Verfahrens können beispielsweise thermoplastische Olefine (TPO) der Sorte Adflex (Montell North America, Inc.) erhalten werden, die Gemische oder Legierungen von EPR-Kautschuken mit Polypropylen(co)polymeren darstellen und im Sinne der vorliegenden Erfindung vorteilhaft als Ausgangsstoffe im erfindungsgemäßen Verfahren verwendet werden können.

Werden Polymergemische von Polypropylen(co)polymeren und EPR-Kautschuken und/oder EPDM-Kautschuken im erfindungsgemäßen Verfahren eingesetzt, ist es bevorzugt, dass der Anteil an EPR- bzw. EPDM-Kautschuken 5 Gew.% bis 80 Gew.-%, vorzugsweise 20 Gew.-% bis 70 Gew.-%, jeweils bezogen auf die Gesamtmenge an Polypropylen(co)polymeren und EPR-Kautschuken und/oder EPDM-Kautschuken, ausmacht. Auf diese Weise können nach der Durchführung des erfindungsgemäßen Verfahrens Klebstoffe, wie beispielsweise Schmelzklebstoffe erhalten werden, die eine hohe Kohäsion sowie Flexibilität aufweisen.

Der Propylenanteil im Polypropylencopolymer liegt vorzugsweise zwischen 50 bis 99 Gew.-%, insbesondere zwischen 60 bis 95 Gew.-% und besonders bevorzugt zwischen 65 bis 90 Gew.-%, jeweils bezogen auf das Gesamtgewicht des Polypropylencopolymers. Polypropylencopolymere, welche die vorgenannten Gewichtsanteile an Propylen aufweisen sind insbesondere vorteilhaft, da die genannten (Co)polymere im erfindungsgemäßen Verfahren unter starker Molekulargewichtsreduzierung und Viskositätserniedrigung besonders effektiv in die jeweiligen Degradierungsprodukte überführt werden können.

Sofern vorhanden, liegt der Ethylengehalt im Polypropylencopolymer vorzugsweise zwischen 1 bis 35 Gew.-% und besonders bevorzugt zwischen 2 bis 25 Gew.-%, jeweils bezogen auf das Gesamtgewicht des Polypropylencopolymers. Polypropylencopolymere mit den vorgenanten Gewichtsanteilen an Ethylen lassen sich ebenfalls effektiv in die jeweiligen Degradierungsprodukte überführen.

Das gewichtsmittlere Molekulargewicht (M_{w}) der im erfindungsgemäßen Verfahren eingesetzten (Co)polymere beträgt vorzugsweise 100.000 g/mol bis 300.000.000 g/mol, besonders bevorzugt 150.000 g/mol bis 3.000.000 g/mol und ganz besonders bevorzugt 250.000 g/mol bis 1.000.000 g/mol, wobei im Rahmen der vorliegenden Erfindung das gewichtsmittlere Molekulargewicht mittels Gelpermeationschromatographie (GPC) unter Verwendung eines Polystyrolstandards bestimmt wird.

Der Einsatz hochmolekularer (Co)polymere mit einem gewichtsmittleren Molekulargewicht von mindestens 100.000 g/mol, vorzugsweise von mindestens 150.000 g/mol und insbesondere von mindestens 250.000 g/mol ist vorteilhaft, da die genannten (Co)polymere kostengünstig herstellbar sind und effektiv zu den jeweiligen Degradierungsprodukten
abgebaut werden können.

Aufgrund der im erfindungsgemäßen Verfahren vorgenommenen Degradierung und des damit verbundenen Molekulargewichtsabbaus ist es in der Regel nicht zweckmäßig, dass niedermolekulare (Co)polymere mit einem gewichtsmittleren Molekulargewicht (M_{w}) von kleiner als 100.000 g/mol als Ausgangstoffe eingesetzt werden.

Vorzugsweise wird Schritt b) des erfindungsgemäßen Verfahrens in der Weise durchgeführt, dass das gewichtsmittlere Molekulargewicht (M_{w}) des ersten degradierten (Co)polymers beim Eintritt in den zweiten Extrusionsabschnitt weniger als 70%, vorzugsweise weniger als 50%, besonders bevorzugt weniger als 30% und überaus bevorzugt weniger als 20% des unter identischen Bedingungen bestimmten gewichtsmittleren Molekulargewichts (M_{w}) des eingesetzten (Co)polymers beträgt.

Die weitere Degradierung in Schritt e) des erfindungsgemäßen Verfahrens wird vorzugsweise in der Weise durchgeführt, dass das letztendlich erreichte gewichtsmittlere Molekulargewicht (M_{w}) des zweiten degradierten (Co)polymers weniger als 70%, vorzugsweise weniger als 50%, besonders bevorzugt weniger als 30% und überaus bevorzugt weniger als 20% des unter identischen Bedingungen bestimmten gewichtsmittleren Molekulargewichts (M_{w}) des ersten degradierten (Co)polymers beträgt.

Das letztendlich erreichte gewichtsmittlere Molekulargewicht (M_{w}) des zweiten degradierten (Co)poylmers beträgt vorzugsweise 10.000 g/mol bis 90.000 g/mol, besonders bevorzugt 20.000 g/mol bis 80.000 g/mol, überaus bevorzugt 30.000 g/mol bis 60.000 g/mol.

Das im erfindungsgemäßen Verfahren eingesetzte (Co)polymer weist vorzugsweise eine bei 200°C bestimmte Schmelzviskosität von mindestens 300.000 mPa·s auf. Insbesondere liegt die bei 200°C bestimmte Schmelzviskosität des (Co)poylmers zwischen 350.000 mPa·s und 20.000.000 mPa·s, vorzugsweise zwischen 400.000 mPa·s und 10.000.000 mPa·s und besonders bevorzugt zwischen 450.000 mPa·s und 5.000.000 mPa·s.

Im Rahmen der vorliegenden Erfindung wird die Schmelzviskosität der jeweiligen (Co)polymere bei 200°C mit Hilfe eines Brookfield Thermosell RVT Viskosimeters (erhältlich von Brookfield Engineering Laboratories, Inc., Stoughton, Mass. USA) bestimmt. Für Viskositäten bis zu 100.000 mPa·s wird eine Spindel 27 verwendet, während zur Bestimmung von Schmelzviskositäten größer als 100.000 mPa·s eine Spindel 29 eingesetzt wird. Die Rotationsgeschwindigkeit der eingesetzten Spindel wird dabei vorzugsweise so gewählt, dass der bei 200°C erhaltene Drehmomentwert bei 10% bis 95%, insbesondere bei 50% liegt.

Weiterhin ist es vorteilhaft, wenn Schritt b) des erfindungsgemäßen Verfahrens in der Weise durchgeführt wird, dass die bei 200°C bestimmte Schmelzviskosität des ersten degradierten (Co)polymers beim Eintritt in den zweiten Extrusionsabschnitt weniger als 70%, vorzugsweise weniger als 50%, besonders bevorzugt weniger als 30% und überaus bevorzugt weniger als 20% der ebenfalls bei 200°C bestimmten Schmelzviskosität des eingesetzten (Co)polymers beträgt.

Darüber hinaus ist es vorteilhaft, wenn Schritt e) des erfindungsgemäßen Verfahrens in der Weise durchgeführt wird, dass die letztendlich erreichte Schmelzviskosität des zweiten degradierten (Co)polymers weniger als 70%, vorzugsweise weniger als 50%, besonders bevorzugt weniger als 30% und überaus bevorzugt weniger als 20% der ebenfalls bei 200°C bestimmten Schmelzviskosität des ersten degradierten (Co)polymers beträgt.

Die letztendlich erreichte und bei 200°C bestimmte Schmelzviskosität des zweiten degradierten (Co)poylmers beträgt vorzugsweise 500 mPa·s bis 1.000.000 mPa·s, besonders bevorzugt 1.000 mPa·s bis 500.000 mPa·s, überaus bevorzugt 2.000 mPa·s bis 250.000 mPa·s und ganz besonders bevorzugt 2500 mPa·s bis 150.000 mPa·s.

Durch die im erfindungsgemäßen Verfahren vorgenommene sequentielle Degradierung des eingesetzten (Co)polymers im Extruder ist es möglich, selbst bei einer relativ geringen Menge an Radikalbildnern, wie beispielsweise Peroxiden, und vergleichsweise niedrigen Temperaturen einen äußerst effizienten Molekulargewichts- und Viskositätsabbau zu erreichen. Es ist daher möglich, nach dem zweiten Extrusionsabschnitt hochgradig degradierte (Co)polymere zu erhalten, die im Vergleich zu den eingesetzten (Co)polymeren ein äußerst niedriges Molekulargewicht und eine äußerste geringe Schmelzviskosität aufweisen.

In einer bevorzugten Ausführungsform des erfindungsgemäßen Verfahrens beträgt daher
- das letztendlich erreichte gewichtsmittlere Molekulargewicht (M_{w}) des zweiten degradierten (Co)polymers weniger als 30%, vorzugsweise weniger als 20%, besonders bevorzugt weniger als 10% und überaus bevorzugt weniger als 5% des unter identischen Bedingungen bestimmten gewichtsmittleren Molekulargewichts (M_{w}) des eingesetzten (Co)polymers, und/oder
- die letztendlich erreichte Schmelzviskosität (200°C) des zweiten degradierten (Co)polymers weniger als 30%, vorzugsweise weniger als 20%, besonders bevorzugt weniger als 10% und überaus bevorzugt weniger als 5% der Schmelzviskosität des eingesetzten (Co)polymers.

Um den Prozess der Degradierung im ersten Extrusionsabschnitt effizient zu kontrollieren, ist es möglich, dass das (Co)polymer unter einer Schutzgasatmosphäre, wie beispielsweise einer Stickstoffatmosphäre und/oder Edelgasatmosphäre, in der Beschickungsöffnung zugegeben wird. Insbesondere ist es vorteilhaft, dass der gesamte Verfahrensschritt a) des erfindungsgemäßen Verfahrens unter einer Schutzgasatmosphäre durchgeführt wird.

Die Degradierung des (Co)polymers unter Scherbeanspruchung im ersten Extrusionsabschnitt erfolgt in Gegenwart mindestens eines Radikalbildners üblicherweise bei Temperaturen oberhalb von 50°C, wobei die optimale Temperatur u.a. von der Menge und chemischen Beschaffenheit des eingesetzten Radikalbildners abhängt. Vorzugsweise erfolgt die Degradierung des (Co)polymers im ersten Extrusionsabschnitt bei einer Temperatur von 100°C bis 320°C, besonders bevorzugt von 120°C bis 290°C und ganz besonders bevorzugt von 140°C bis 280°C.

Der Radikalbildner selbst kann im ersten Extrusionsabschnitt über die Beschickungsöffnung und/oder über ein Radikalbildnerzugabemittel zugegeben werden.

Die erfindungsgemäß verwendeten Radikalbildner sind vorzugsweise Peroxo- oder Diazogruppen enthaltende Verbindungen, wobei Peroxide, wie etwa organische Peroxide, aufgrund ihrer guten kommerziellen Verfügbarkeit und leichten Handhabbarkeit besonders bevorzugt sind. Geeignete Radikalbildner können beispielsweise ausgewählt werden aus den folgenden Produkten bzw. Verbindungen und/oder aus deren beliebigen Mischungen: TRIGONOX 101® (2,5-Dimethyl-2,5-di-[tert-butylperoxyl]hexan), TRIGONOX 301® (3,6,9-Triethyl-3,6,9-trimethyl-1,4,7-triperoxonan), beide kommerziell erhältlich von AKZO, Di-tert-amylperoxid, kommerziell erhältlich von CK Witco als DTAP® und von AKZO als Trigonox 201®, Dicumylperoxid, Di-tert-butylperoxid, 2,5-Dimethyl-2,5-di(tert-butyl peroxy)-3-hexin, 1,3-Bis(tert-butylperoxyisopropyl)phenyl, 1,1-Bis(tert-butylperoxy)-3,3,5-trimethylcyclohexan, n-Butyl-4,4-bis(tert-butylperoxy)valerat, Benzoylperoxid, p-Chlorbenzoylperoxid, 2,4-Dichlorbenzoylperoxid, Tert-butylperoxybenzoat, tert-Butylperoxyisopropylcarbonat, Diacetylperoxid, Lauroylperoxid, Tert-Butylcumylperoxid, Tert-butylperoxy-2-ethylhexanoat.

Bevorzugte Peroxide besitzen eine in Monochlorbenzol bei 150°C bestimmte Halbwertzeit von 0,01 h bis 10 h, vorzugsweise von 0,1 h bis 5 h und besonders bevorzugt von 0,3 h bis 3 h.

Bezogen auf die Gesamtmenge an (Co)polymer ist es im Sinne des erfindungsgemäßen Verfahrens vorteilhaft, dass der Radikalbildner in einer Menge von 0,02 bis 5 Gew.-%, vorzugsweise von 0,05 bis 2 Gew.-% und insbesondere von 0,1 und 1 Gew.-% zugegeben wird.

Vorzugsweise wird als Radikalbildner ein Peroxid in einer Menge von 0,05 bis 3 Gew.-%, besonders bevorzugt von 0,1 bis 2 Gew.-% und insbesondere von 0,2 und 1 Gew.-%, jeweils bezogen auf die Gesamtmenge an (Co)polymer zugegeben.

Durch die beschriebene Menge an Radikalbildner bzw. Peroxid kann der Degradierungsprozess bei einer Temperatur von 100°C bis 320°C, vorzugsweise von 120°C bis 290°C und besonders bevorzugt von 140°C bis 280°C durchgeführt werden, wobei relativ kurze Verweilzeiten im ersten Extrusionsabschnitt von 0,1 min bis 3 min verwirklicht werden können.

Insbesondere ist es bevorzugt, dass das erste degradierte (Co)polymer beim Eintritt in den zweiten Extrusionsabschnitt einen Anteil an Radikalbildnern aufweist, der kleiner ist als 0,01 Gew.-%, vorzugsweise kleiner ist als 0,005 Gew.-% und besonders bevorzugt kleiner ist als 0,001 Gew.-%, jeweils bezogen auf die Gesamtmenge des ersten degradierten (Co)polymers.

Durch die Auswahl eines Radikalbildners mit einer geeigneten Halbwertzeit, der Einstellung einer geeigneten Temperatur und einer entsprechenden Verweilzeit des (Co)polymers im ersten Extrusionsabschnitt, kann die Menge an Radikalbildner im ersten degradierten (Co)polymer beim Eintritt in den zweiten Extrusionsabschnitt gesteuert bzw. beeinflusst werden.

Eine Restkonzentration von kleiner als 0,01 Gew.-% an Radikalbildner im ersten degradierten (Co)polymer beim Eintritt in den zweiten Extrusionsabschnitt ist vorteilhaft, da die geringe verbliebene Restmenge an Radikalbildnern keinen störenden Effekt auf die weitere Degradierung im zweiten Extrusionsabschnitt ausübt. Insbesondere wird die Sicherheit des zweiten Degradierungsvorgangs durch das nahezu vollständige Entfernen des Radikalbildners verbessert.

In Schritt c) der erfindungsgemäßen Verfahrens wird das erste degradierte (Co)polymer von dem ersten Extrusionsabschnitt in einen zweiten Extrusionsabschnitt des Extruders überführt, wobei der erste Extrusionsabschnitt von dem zweiten Extrusionsabschnitt durch ein oben genanntes Dichtmittel abgetrennt ist.

Anschließend wird ein Sauerstoffgas in den zweiten Extrusionsabschnitt über eine Zuführöffnung zugegeben, wobei die Zuführöffnung in Extrusionsrichtung hinter dem Dichtmittel angeordnet ist. Nach der Zuführung des Sauerstoffgases erfolgt im zweiten Extrusionsabschnitt ebenfalls unter Scherbeanspruchung eine weitere Degradierung des ersten degradierten (Co)polymers, insbesondere bei Temperaturen oberhalb von 50°C. Hierbei wird ein zweites degradiertes (Co)polymer aus dem ersten degradierten (Co)polymer gebildet.

Die weitere Degradierung des degradierten (Co)polymers im zweiten Extrusionsabschnitt wird vorzugsweise bei einer Temperatur von 200°C bis 450°C, besonders bei 220°C bis 400°C und ganz besonders bevorzugt bei 250°C bis 350°C durchgeführt. Bemerkenswert ist, dass durch die erste Degradierung in Gegenwart eines Radikalbildners in Schritt b) des erfindungsgemäßen Verfahrens die Temperatur im zweiten Degradierungsschritt e) gegenüber Degradierungsverfahren, die allein Sauerstoffgas verwenden, signifikant reduziert werden kann. Auf diese Weise wird der Gesamtenergiebedarf des erfindungsgemäßen Verfahrens gesenkt, was die Energieeffizienz des genannten Verfahrens deutlich verbessert.

Bei dem im erfindungsgemäßen Verfahren zugeführten Sauerstoffgas kann es sich um reinen Sauerstoff oder um ein sauerstoffhaltiges Gasgemisch handeln. Als sauerstoffhaltiges Gasgemisch sind insbesondere solche Gasgemische bevorzugt, die einen Sauerstoffanteil von mindestens 5 Vol.-%, besonders bevorzugt von mindestens 10 Vol.-% und überaus bevorzugt von mindestens 20 Vol.-% aufweisen. Aus Kostengründen ist es besonders vorteilhaft als Sauerstoffgas Umgebungsluft oder mit Sauerstoff angereicherte Umgebungsluft zu verwenden.

Um während des erfindungsgemäßen Verfahrens eine weitere Funktionalisierung des degradierten (Co)polymers zu erreichen, kann mindestens eine zu einer Pfropfungsreaktion befähigte reaktive Komponente zugegeben werden. Die Zugabe kann beispielsweise im ersten Extrusionsabschnitt über die Beschickungsöffnung mit dem (Co)polymer oder zusammen mit dem Radikalbildner erfolgen.

Alternativ dazu kann während und/oder nach dem zweiten Degradierungsvorgang das entsprechende (Co)polymer weiter funktionalisiert werden, indem das zugeführte Sauerstoffgas mindestens eine zu einer Pfropfungsreaktion befähigte reaktive Komponente enthält. In diesem Zusammenhang ermöglicht das erfindungsgemäße Verfahren, den jeweiligen Gehalt an Radikalbildnern während der Pfropfungsreaktion genau zu kontrollieren, da die Menge an verbliebenen Radikalbildnern durch die Bedingungen des ersten Degradierungsschrittes gesteuert bzw. eingestellt werden kann.

Bevorzugte zu einer Pfropfungsreaktion befähigte reaktive Komponenten umfassen mindestens eine ungesättigte Doppel- und/oder Dreifachbindung. Typische Beispiele dafür sind ethylenisch ungesättigte Carbonsäuren oder deren Derivate, wie z.B. Anhydride, Ester, Amide, Nitrile oder Halogenide, Vinyl-substituierte aromatische oder heteroaromatische Verbindungen oder aliphatische Vinylverbindungen bzw. deren Mischungen. Bevorzugte zu einer Pfropfungsreaktion befähigte reaktive Komponenten sind Verbindungen aus der Gruppe der ungesättigten Carbonsäuren bzw. deren Anhydriden, der Vinyl- oder Divinylaromaten und der aliphatischen Diene. Besonders bevorzugt sind Maleinsäureanhydrid, Styrol, Acrylnitril, Methacrylnitril, Acrylsäureester und Methacrylsäureester.

In einer Ausführungsform des erfindungsgemäßen Verfahrens werden die zu einer Pfropfungsreaktion befähigten reaktive Komponenten in einer Menge von 0,001 bis 1 Gew.-%, vorzugsweise in einer Menge von 0,01 bis 0,5 Gew.-%, jeweils bezogen auf die Gesamtmenge der degradierten (Co)polymere, zugesetzt.

In einer vorteilhaften Weiterbildung der vorliegenden Erfindung weist das Sauerstoffgas vor der Zugabe eine Temperatur von mindestens 50°C auf. Darüber hinaus ist es vorteilhaft, wenn das Sauerstoffgas mit einem Druck von mindestens 5 bar zugegeben wird.

Um die Degradierungseffizienz des erfindungsgemäßen Verfahrens weiter zu erhöhen, kann das zweite degradierte (Co)polymer vom zweiten Extrusionsabschnitt in einen weiteren Extrusionsabschnitt überführt werden, wobei der zweite Extrusionsabschnitt von dem weiteren Extrusionsabschnitt durch ein Dichtmittel abgetrennt ist und der weitere Extrusionsabschnitt eine zusätzliche Beschickungsöffnung und/oder Zuführöffnung aufweist. Insbesondere das Dichtmittel kann dabei wie oberhalb beschrieben ausgestaltet und insbesondere eine oberhalb beschriebene Staustufe sein. In dem weiteren Extrusionsabschnitt kann ebenfalls mindestens eine zu einer Pfropfungsreaktion befähigte reaktive Komponente zugegeben werden, um eine weitere Funktionalisierung des (Co)polymers zu erreichen.

In einer vorteilhaften Weiterbildung weist der zweite und/oder der weitere Extrusionsabschnitt ein in Extrusionsrichtung hinter der Zuführöffnung angeordnetes Abbaumittel zum Abbauen des Sauerstoffgases auf. Auf diese Weise kann ein unerwünschtes Aufschäumen des degradierten (Co)polymers verhindert oder reduziert werden. Als Abbaumittel sind insbesondere ein Vakuum und/oder eine Rückentgasungsstufe geeignet.

In einer Ausführungsform der vorliegenden Erfindung erfolgt nach Verlassen des zweiten Extrusionsabschnittes die Transformation des zweiten degradierte (Co)polymers in ein Schüttgut, insbesondere mittels eines Stranggranulators, eines Unterwassergranulators oder eines Granulators mit Heissabschlag.

In einer alternativen Ausführungsform des Verfahrens wird die sequentielle Degradierung von (Co)polymeren unter Umkehrung der Abbauschritte durchgeführt, so dass in einem ersten Extrusionsabschnitt eine Degradierung des eingesetzten (Co)polymers mittels eines Sauerstoffgases erfolgt und im zweiten Extrusionsabschnitt ein weiterer Abbau des (Co)polymers durch Einwirkung mindestens eines Radikalbildners erreicht wird.

Dieses zweite Verfahren zur Degradierung von (Co)polymeren in einem Extruder umfasst vorzugsweise die folgenden Schritte:
i) Zuführung eines (Co)polymers mittels einer Beschickungsöffnung in einen ersten Extrusionsabschnitt des Extruders, wobei in Extrusionsrichtung hinter der Beschickungsöffnung ein erstes Dichtmittel angeordnet ist;
ii) Zuführung von Sauerstoffgas mittels einer ersten Zuführöffnung in den ersten Extrusionsabschnitt, wobei die Zuführöffnung in Extrusionsrichtung hinter der Beschickungsöffnung und hinter dem ersten Dichtmittel angeordnet ist;
iii) Degradierung des (Co)polymers unter Scherbeanspruchung im ersten Extrusionsabschnitt in Gegenwart eines Sauerstoffgases zur Herstellung eines ersten degradierten (Co)polymers;
iv) Überführung des ersten degradierten (Co)polymers von dem ersten Extrusionsabschnitt in einen zweiten Extrusionsabschnitt des Extruders, wobei der erste Extrusionsabschnitt von dem zweiten Extrusionsabschnitt durch ein zweites Dichtmittel abgetrennt ist;
v) Zuführung mindestens eines Radikalbildners mittels eines Radikalbildnerzugabemittel in den zweiten Extrusionsabschnitt, wobei das Radikalbildnerzugabemittel in Extrusionsrichtung hinter dem zweiten Dichtmittel angeordnet ist;
vi) Weitere Degradierung des ersten degradierten (Co)polymers unter Scherbeanspruchung im zweiten Extrusionsabschnitt in Gegenwart eines Radikalbildners zur Herstellung eines zweiten degradierten (Co)polymers;
mit der Maßgabe, dass das erste Dichtmittel geeignet ist, das Entweichen des Sauerstoffgases aus der Beschickungsöffnung zu verhindern und das zweite Dichtmittel geeignet ist, das das Entweichen des Sauerstoffgases aus dem Radikalbildnerzugabemittel zu verhindern.

Ein zur Durchführung des zweiten Verfahrens geeigneter Extruder zur Degradierung von (Co)polymeren umfasst:
- einen Extrusionsraum enthaltend mindestens zwei Extrusionsabschnitte;
- eine Beschickungsöffnung zur Beschickung des ersten Extrusionsabschnittes mit zumindest einem (Co)polymer;
- ein in Extrusionsrichtung hinter der Beschickungsöffnung angeordnetes erstes Dichtmittel;
- eine in Extrusionsrichtung hinter der Beschickungsöffnung und hinter dem Dichtmittel angeordnete erste Zuführöffnung zur Zugabe eines Sauerstoffgases in den ersten Extrusionsabschnitt;
- ein den ersten Extrusionsabschnitt vom zweiten Extrusionsabschnitt trennendes zweites Dichtmittel, das in Extrusionsrichtung hinter der ersten Zuführöffnung vorgesehen ist;
- eine in Extrusionsrichtung hinter dem zweiten Dichtmittel angeordnete Radikalbildnerzugabemittel zur Zugabe mindestens eines Radikalbildners in den zweiten Extrusionsabschnitt;
mit der Maßgabe, dass das erste Dichtmittel geeignet ist, das Entweichen des Sauerstoffgases aus der Beschickungsöffnung zu verhindern und das zweite Dichtmittel geeignet ist, das Entweichen des Sauerstoffgases aus dem Radikalbildnerzugabemittel zu verhindern.

Sofern anwendbar, beziehen sich die vorgenannten bevorzugten Ausführungsformen des ersten erfindungsgemäßen Verfahrens explizit auch auf das o.g. zweite
Verfahren und auf den zur Durchführung des zweiten Verfahrens geeigneten Extruder. Dies gilt insbesondere für die Ausgestaltung des (Co)polymers, des ersten degradierten (Co)polymers, des zweiten degradierten (Co)polymers, der Extrusionsabschnitte, des Radikalbildners, des Sauerstoffgases, der Beschickungsöffnung, der Zuführöffnung, des Radikalbildnerzugabemittels und des Dichtmittels.

Die durch das erste oder zweite Verfahren hergestellen degradierten (Co)polymere können vorteilhafterweise als Bestandteile von Klebstoffen bzw. Schmelzklebstoffen eingesetzt werden. Diese Klebstoffe bzw. Schmelzklebstoffe können beispielsweise zum Verkleben von Substraten, wie unlackiertes oder beschichtetes Papier, vor- und nachimprägnierte Papierfolien bzw. entsprechende Pappen, Folien, Kunststoffe oder Glas verwendet werden, sowie für andere Anwendungen. Mit Hilfe der genannten Klebstoffe bzw. Schmelzklebstoffe können Mehrschichtfolien, Verpackungen, holzverklebte Substrate, Bücher, Filter, Nonwovens, künstlicher Rasen bzw. Teppichrücken hergestellt werden oder Behälter wie Faltschachteln, Umkartons oder Trays.

Ein für das erfindungsgemäße Verfahren einsetzbarer Extruder wird in den beiliegenden Zeichnungen abgebildet. Darin zeigt
Figur 1 einen Ausschnitt einer geschnittenen Seitenansicht eines erfindungsgemäßen Extruders zur Durchführung eines erfindungsgemäßen Verfahrens,
Figur 2 eine alternative Ausführungsform eines erfindungsgemäßen Extruders,
Figur 3 eine weitere Alternative eines erfindungsgemäßen Extruders.

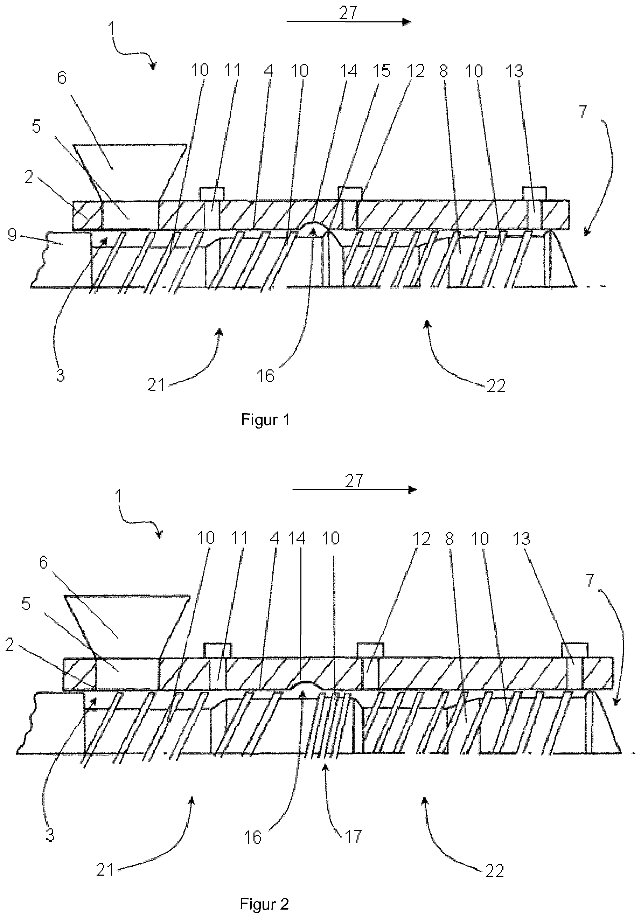

Figur 1 zeigt einen Ausschnitt einer geschnittenen Seitenansicht eines erfindungsgemäßen Extruders 1 zur Durchführung eines erfindungsgemäßen Verfahrens. Der Extruder 1 dient der Degradierung eines (Co)polymers und umfasst einen ersten Extrusionsabschnitt 21, welcher die Degradierung des (Co)polymers unter Scherbeanspruchung in Gegenwart mindestens eines Radikalbildners zur Herstellung eines ersten degradierten (Co)polymers vorsieht. Ferner umfasst der Extruder 1 einen in eine Förderrichtung 27 des (Co)polymers hinter besagtem ersten Extrusionsabschnitt 21 angeordneten und sich an selbigen anschließenden zweiten Extrusionsabschnitt 22, in dem eine weitere Degradierung des ersten degradierten (Co)polymers unter Scherbeanspruchung in Gegenwart eines Sauerstoffgases zur Herstellung eines zweiten degradierten (Co)polymers vorgesehen ist.

Bei dem gezeigten Extruder 1 handelt es sich um einen Mehrwellenextruder, präziser gesagt um einen Doppelschneckenextruder, bei dem in einem, einen in einer Schnittansicht achtförmigen Extrusionsraum 3 durch seine Innenwandung 4 umschließenden Gehäuse 2 zwei parallel zueinander angeordnete rotierbare Extruderschnecken 8 vorgesehen sind, welche sich in Längsrichtung des Gehäuses 2 erstrecken. Die Schnecken 8 weisen insbesondere zur Beförderung des im Anwendungsfall im Extrusionsraum 3 zwischen der Oberfläche der Schnecken 8 und der Innenwandung 4 des Gehäuses 2 angeordneten Rohmaterials und/oder Extrudats an ihrem äußeren Umfang schraubenlinienförmige Schneckenstege 10 auf. Die Schnecken 8 sind an einer Zuführseite des Extruders 1 einseitig am Gehäuse 2 gelagert und werden beispielsweise über eine Antriebswelle 9, insbesondere mittels einer Keilwellenverbindung oder eine Passfederverbindung mit einer nicht gezeigten Getriebestufe verbunden und durch einen nicht gezeigten Elektromotor angetrieben. Es kann sich hierbei um beliebige, dem Fachmann bekannte Ausgestaltungen handeln, insbesondere um einen tangierenden Gleichdralldoppelschneckenextruder, einen dichtkämmenden Gleichdralldoppelschneckenextruder, einen tangierenden Gegendralldoppelschneckenextruder oder einen dichtkämmenden Gegendralldoppelschneckenextruder.

An der im Hinblick auf die Zuführseite gegenüberliegenden Seite weist das Gehäuse 1 die eine Austrittsöffnung 7 auf. Hier wird das Extrudat, im vorliegenden Fall ein insbesondere aus einem (Co)polymers , beispielsweise einem Polypropylen(co)polymer hergestellter Schmelzklebstoff aus dem Extruder 1 ausgegeben und an einen nicht gezeigten Granulator insbesondere ein Stranggranulator, Unterwassergranulat oder Granulator mit Heissabschlag, angeschlossen werden, um den Schmelzklebstoff in ein in Schüttgut zu transformieren. Ferner kann der Extruder 1 eine Vielzahl von nicht gezeigten Heizelementen aufweisen, die das Gehäuse 2 und das im Extruder 1 angeordnete (Co)polymer erhitzen und welche vorzugsweise unabhängig voneinander regelbar sind. Gleichwohl können die Heizelemente auch als Kühlelemente ausgestaltet sein. Die Heizelemente können insbesondere in Form von elektrischen Heizpatronen oder Heizschalen ausgestaltet sein. Zudem können insbesondere zur Kühlung des Gehäuses 2 beispielsweise nicht abgebildete, einzeln ansteuerbare Wasserkreisläufe verwendet werden. Auf diese Weise kann ein Überhitzen des (Co)polymer mit einem damit verbundenen Materialabbau vermieden werden. Vorzugsweise dienen diese Möglichkeiten zur Heizung und Kühlung jedoch nicht der Aufschmelzung des (Co)polymer, sondern der Temperierung des Prozesses. Die Aufschmelzung erfolgt über die Energieeinleitung durch die Drehung der Schnecken 8.

Der Extruder 1 weist im Bereich der Zuführseite eine erste Einfüllöffnung 5 mit einem Einfülltrichter 6 auf, in dem ein (Co)polymer und gegebenenfalls weitere Additive unter einer Schutzgasatmosphäre zugeführt werden können. Der gezeigte Extruder 1 umfasst im ersten Extrusionsabschnitt 21 mehrere Extruderzonen. Hierunter können Funktionszonen verstanden werden, wie beispielsweise eine Einzugszone, in der das (Co)polymer über die Zuführöffnung 5 in den Extruder 1 eingefüllt und durch die Extruderschnecken 8 weiterbefördert wird; eine Plastifizierungszone oder Kompressionszone, insbesondere zum Aufschmelzen oder Plastifizieren des (Co)polymers, bei der mittels einer Peroxidzugabe 11, einer Zuführöffnung in der Wandung des Gehäuses 2, ein Initiator, im vorliegenden Fall mindestens ein Peroxid als Radikalbildner, zugegeben wird. Alternativ ist es möglich, dass der Initiator nicht erst in der Plastifizierungszone, sondern bereits in der Einzugszone oder in die Einfüllöffnung 5 mit dem (Co)polymer zugegeben wird. Ferner kann eine Degradierungszone oder Hochtemperaturzone vorgesehen werden, in der insbesondere ein Initatorabbau erfolgen kann, sowie gegebenenfalls eine den ersten Extrusionsabschnitt 21 abschließende Temperaturerhöhungszone für einen weiteren Abbau des verbliebenen Initiators.

Der Extruder 1 und insbesondere die Schnecken 8 sind derart ausgelegt, dass im ersten Extrusionsabschnitt 21 eine thermomechanische Degradierung des (Co)polymers durch Scherbeanspruchung in Gegenwart des besagten Peroxids als Radikalbildner erfolgt, um ein erstes degradiertes (Co)polymers herzustellen. Diese Degradierung im ersten Extrusionsabschnitt 21 erfolgt dabei in einem Temperaturbereich von 100°C bis 320°C. Im Bereich des ersten Extrusionsabschnittes 21 kann der Extruder 1 zudem nicht gezeigte Entgasungsöffnungen aufweisen, um flüchtige Bestandteile, insbesondere des Peroxids mittels eines an der Entgasungsöffnung angelegten Vakuums abzusaugen.

Zur weiteren Degradierung des auf diese Weise im ersten Extrusionsabschnitt 21 degradierten (Co)polymers ist eine Überführung des (Co)polymers in den sich direkt anschließenden zweiten Extrusionsabschnitt 22 vorgesehen. Bei der Überführung des degradierten (Co)Polymers weist selbiges im gezeigten Ausführungsbeispiel noch einen Restanteil an Peroxid auf, der, bezogen auf die Gesamtmenge des ersten degradierten (Co)polymers, kleiner ist als 0,01 Gew.-%.

Im zweiten Extrusionsabschnitt ist eine Gasgemischzugabe 12, in Form einer Zuführöffnung in der Wandung des Gehäuses 2 vorgesehen, wobei hier dem im ersten Extrusionsabschnitt 21 degradierten (Co)polymer Sauerstoff und/oder ein sauerstoffhaltiges Gasgemisch in den zweiten Extrusionsabschnitt 22 zugegeben wird, um dadurch eine weitere Degradierung des ersten degradierten (Co)polymers unter weiterer Scherbeanspruchung zur Herstellung eines zweiten degradierten (Co)polymers zu ermöglichen. Bei der Verwendung eines sauerstoffhaltigen Gasgemisches beträgt der Sauerstoffanteil dabei mindestens 5 Vol.-%. Besagte Degradierung im zweiten Extrusionsabschnitt 22 erfolgt im gezeigten Ausführungsbeispiel in einem Temperaturbereich von 200°C bis 450°C. Der gezeigte Extruder 1 weist zudem Mittel zum Temperieren des an der Gasgemischzugabe 12 zugeführten Sauerstoffes und/oder sauerstoffhaltigen Gasgemisches auf. Im gezeigten Ausführungsbeispiel hat sich eine Mindesttemperatur von 50°C bei der Zugabe als sinnvoll erwiesen. Die Zugabe des Sauerstoffes und/oder sauerstoffhaltigen Gasgemisches erfolgt mit einem Druck von mindestens 5 bar.

Um ein Entweichen des in den zweiten Extrusionsabschnitt 22 eingebrachten Sauerstoffes und/oder des sauerstoffhaltigen Gasgemisches in den ersten Extrusionsabschnitt 21 und insbesondere aus der Einfüllöffnung 5 zu verhindern, ist der erste Extrusionsabschnitt 21 von dem zweiten Extrusionsabschnitt 22 durch ein Dichtmittel abgetrennt und die Gasgemischzugabe 12 in Förderrichtung 27 hinter einem Dichtmittel angeordnet.

Das Dichtmittel wird im vorliegenden Ausführungsbeispiel durch eine Staustufe bereitgestellt. Wesentliches Merkmal sind hier in Förderrichtung 27 vor dem zweiten Extrusionsabschnitt 22, also vor der Gasgemischzugabe 12 vorgesehene ringförmige Verdickungen 15 der Schnecken 8, die vorzugsweise maximal den gleichen Durchmesser wie die Schraubenstege 10 aufweisen. Diesen Verdickungen 15 zugeordnet sind gleichsam ringförmige Ausnehmungen 14 in die Innenwandung 4 des Gehäuses 2 eingebracht, welche in Förderrichtung 27 oder in axiale Richtung der Schnecke 8 vor den Verdickungen 15 angeordnet sind. Die Verdickungen 15 führen zu einem gedrosselten Schmelzedurchtritt zwischen Schnecke 8 und Innenwandung 4 des Gehäuses 2, so dass eine Staustufe für die Schmelze bereitgestellt werden kann. Zusätzlich wird durch die Ausnehmungen 14 ein Stauraum 16 bereitgestellt, in dem sich die durch die Verdickungen 15 angestaute Schmelze ansammelt. Die aufgestaute Schmelze an in dem ersten Extrusionsabschnitt 21 degradiertem (Co)polymer dichtet dabei den ersten Extrusionsabschnitt 21 von zweiten Extrusionsabschnitt 22 ab. So kann durch die Verdickungen 15 und zusätzlich über die Ausnehmungen 14 und den so entstandenen Stauraum 16 ein Dichtmittel bereitgestellt werden, was den ersten Extrusionsabschnitt 21 von dem zweiten Extrusionsabschnitt 22 abtrennt, um ein Entweichen des in den zweiten Extrusionsabschnitt 22 eingebrachten Sauerstoffes und/oder des sauerstoffhaltigen Gasgemisches in den ersten Extrusionsabschnitt 21 und insbesondere aus der Einfüllöffnung 5 zu verhindern.

Im zweiten Expansionsabschnitt 22 kann neben der Zuführung des Sauerstoffes und/oder des sauerstoffhaltigen Gasgemisches über die Gasgemischzugabe 12 auch eine Zuführung mindestens eines weiteren Additivs über eine nicht gezeigte Zuführöffnung denkbar sein.

Der Extruder 1 und insbesondere die Schnecken 8 sind auch im zweiten Extrusionsabschnitt 22 derart ausgelegt, dass eine thermomechanische Degradierung des (Co)polymers durch Scherbeanspruchung in Gegenwart des Sauerstoffes und/oder des sauerstoffhaltigen Gasgemisches erfolgt, um ein zweites degradiertes (Co)polymers zu erhalten. In Förderrichtung 27 endseitig des Extruders 1 ist im Bereich des zweiten Extrusionsabschnitt 22 ein Entgasungsmittel 13 vorgesehen, um flüchtige Bestandteile, insbesondere des über die Gasgemischzugabe 12 eingebrachten Sauerstoffes und/oder des sauerstoffhaltigen Gasgemisches mittels eines an das Entgasungsmittel 13 angelegten Vakuums abzusaugen.

Figur 2 zeigt eine alternative Ausführungsform eines erfindungsgemäßen Extruders 1, der grundsätzlich die gleichen technischen Merkmale aufweist, wie der in Figur 1 gezeigte Extruder 1. Der Extruder 1 ist auch hier in zwei Extrusionsabschnitte 21, 22 unterteilt, wobei in dem ersten Extrusionsabschnitt 21 ein über den Einfülltrichter 6 und die Einfüllöffnung 5 eingebrachtes (Co)polymer mittels eines über die Peroxidzugabe 11 zugegebenen Peroxids unter Scherbeanspruchung durch die Schnecken 8 zur Herstellung eines ersten degradierten (Co)polymers degradiert wird. In dem sich an den ersten Extrusionsabschnitt 21 anschließenden zweiten Extrusionsabschnitt 22 wird über die Gasgemischzugabe 12 Sauerstoff und/oder ein sauerstoffhaltiges Gasgemisch zur weiteren Degradierung des ersten degradierten (Co)polymers unter Scherbeanspruchung zugeführt. Der wesentliche Unterschied liegt hier in der Gestaltung des Dichtmittels zwischen dem ersten Extrusionsabschnitt 21 und dem zweiten Extrusionsabschnitt 22. Im Gegensatz zu den für die Degradierung und die Beförderung der Schmelze genutzten Schraubstegen 10 weisen die Schnecken 8 im bereich des Dichtmittels zwischen besagten Extrusionsabschnitten 21, 22 einen Stauabschnitt 17 auf, bei denen die Schraubenstege 10 eine geringere Steigung aufweisen, als in den übrigen Bereichen, um in diesem Bereich eine Reduzierung der Fördergeschwindigkeit in Förderrichtung 27 und eine Stauung der Schmelze im Stauraum 16 im Bereich der hier in Förderrichtung 27 vor dem Stauabschnitt 17 angeordneten Ausnehmungen 14 zu ermöglichen. Durch diese Stauung kann eine Abdichtung des zweiten Extrusionsabschnittes 22 von dem ersten Extrusionsabschnitt 21 ermöglicht werden, um ein Entweichen des in den zweiten Extrusionsabschnitt 22 eingebrachten Sauerstoffes und/oder des sauerstoffhaltigen Gasgemisches in den ersten Extrusionsabschnitt 21 und insbesondere aus der Einfüllöffnung 5 zu verhindern.

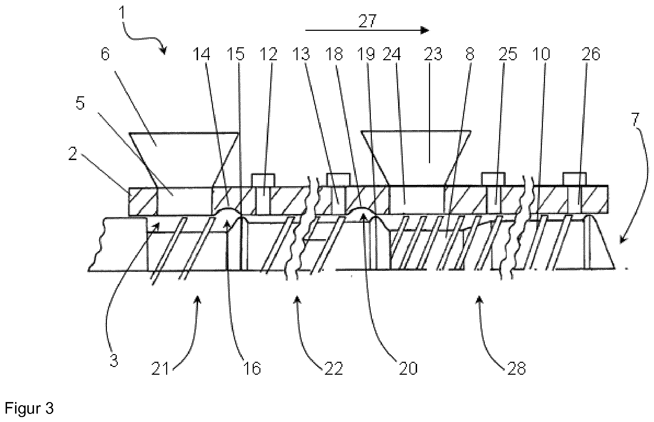

Figur 3 zeigt eine weitere Alternative eines erfindungsgemäßen Extruders 1. Im Wesentlichen gleicht der hier gezeigte Extruder 1 dem Extruder 1 aus Figur 1. Wobei hier die Zugabe des Peroxids als Radikalbildner für den ersten Extrusionsabschnitt bereits über den Einfülltrichter 6 in die Einfüllöffnung 5 zugegeben wird. Der Extruder 1 weist wieder den ersten Extrusionsabschnitt 21 für die thermodynamische Degradierung des (Co)polymers auf sowie einen sich daran anschließenden zweiten Extrusionsraum 22 zur weitere Degradierung des (Co)Polymers unter Einsatz eines über die Gasgemischzugabe 12 zugegebenen Sauerstoffs oder sauerstoffhaltigen Gasgemisches. Der zweite Extrusionsraum 22 ist auch hier wieder von dem zweiten Extrusionsabschnitt 22 durch ein aus Ausdehnungen 14, Verdickungen 15 und Stauraum 16 bereitgestelltes Dichtmittel derart getrennt, dass ein Entweichen des in den zweiten Extrusionsabschnitt 22 eingebrachten Sauerstoffes und/oder des sauerstoffhaltigen Gasgemisches in den ersten Extrusionsabschnitt 21 und insbesondere aus der Einfüllöffnung 5 sicher verhindert werden kann. Zudem weist der zweite Extrusionsraum 22 ein in Förderrichtung 27 hinter der Gasgemischzugabe 12 angeordnetes Entgasungsmittel 13 auf.

Ferner umfasst der dargestellte Extruder 1 weiterer in Förderrichtung 27 hinter dem zweiten Extrusionsabschnitt 22 und sich an selbigen anschließende dritten Extrusionsabschnitt 28. Dabei ist der zweite Extrusionsraum 22 von besagtem dritten Extrusionsabschnitt 28 durch ein mittels zweiten Ausdehnungen 18, zweiten Verdickungen 19 und einen zweiten Stauraum 20 bereitgestelltes Dichtmittel derart getrennt, dass insbesondere ein Entweichen des in den zweiten Extrusionsabschnitt 22 eingebrachten Sauerstoffes und/oder des sauerstoffhaltigen Gasgemisches in besagten dritten Extrusionsabschnitt 28 sicher verhindert werden kann.

Der dritte Extrusionsabschnitt 28 weist einen zweiten Einfülltrichter 23 und eine zweite Einfüllöffnung 24 auf, durch die weitere Additive oder Hilfsstoffe zugegeben werden können. Im vorliegenden Ausführungsbeispiel kann hier beispielsweise ein klebrigmachendes Harz, ein Wachs, ein Vernetzungsmittel, ein Füllstoff, ein Antioxidant, ein Adhäsionspromotor, ein Öl, ein Weichmacher oder ein Elastomer und/oder eine Vielzahl der genannten und/oder eine beliebige Mischungen aus den genannten, beispielsweise über den zweiten Einfülltrichter 23 zugegeben werden. Die Schnecken 8 vermischen nach Zuführung des Additivs selbiges mit dem degradierten (Co)polymer unter Scherbeanspruchung zur Herstellung des Schmelzklebstoffes. Zudem ist eine weitere Zugabeöffnung 25 und endseitig des dritten Extrusionsabschnittes 28 eine weitere Entgasungsöffnung 25 vorgesehen, um flüchtige Bestandteile, insbesondere Restbestandteile des Sauerstoffes und/oder sauerstoffhaltigen Gasgemisches beispielsweise mittels eines Vakuums abzusagen.

| | | | |
|---|---|---|---|
| 1 | Extruder | 16 | Stauraum |
| 2 | Gehäuse | 17 | Stauabschnitt |
| 3 | Extrusionsraum | 18 | Zweite Ausnehmung |
| 4 | Innenwandung | 19 | Zweite Verdickung |
| 5 | Einfüllöffnung | 20 | Zweiter Stauraum |
| 6 | Einfülltrichter | 21 | Erster Extrusionsabschnitt |
| 7 | Ausgabeöffnung | 22 | Zweiter Extrusionsabschnitt |
| 8 | Schnecken | 23 | Zweiter Einfülltrichter |
| 9 | Antriebswelle | 24 | Zweite Einfüllöffnung |
| 10 | Schraubensteg | 25 | Weitere Zugabeöffnung |
| 11 | Peroxidzugabe | 26 | Weitere Entgasungsöffnung |
| 12 | Gasgemischzugabe | 27 | Förderrichtung |
| 13 | Entgasungsmittel | 28 | Dritter Extrusionsabschnitt |
| 14 | Ausnehmungen | | |
| 15 | Verdickungen | | |

## Patentansprüche

1. Verfahren zur Degradierung von (Co)polymeren in einem Extruder (1), umfassend die Schritte:
a) Zuführung eines (Co)polymers mittels einer Beschickungsöffnung (5) in einen ersten Extrusionsabschnitt (21) des Extruders (1);
b) Degradierung des (Co)polymers unter Scherbeanspruchung im ersten Extrusionsabschnitt (21) in Gegenwart mindestens eines Radikalbildners zur Herstellung eines ersten degradierten (Co)polymers;
c) Überführung des ersten degradierten (Co)polymers von dem ersten Extrusionsabschnitt (21) in einen zweiten Extrusionsabschnitt (22) des Extruders (1), wobei der erste Extrusionsabschnitt (21) von dem zweiten Extrusionsabschnitt (22) durch ein Dichtmittel (14, 15, 16, 17) abgetrennt ist;
d) Zuführung von Sauerstoffgas mittels einer Zuführöffnung (12) in den zweiten Extrusionsabschnitt (22), wobei die Zuführöffnung (12) in Extrusionsrichtung (27) hinter dem Dichtmittel (14, 15, 16, 17) angeordnet ist; und
e) Weitere Degradierung des ersten degradierten Copolymers unter Scherbeanspruchung im zweiten Extrusionsabschnitt (22) in Gegenwart eines Sauerstoffgases zur Herstellung eines zweiten degradierten (Co)polymers;
mit der Maßgabe, dass das Dichtmittel (14, 15, 16, 17) geeignet ist, das Entweichen des Sauerstoffgases aus der Beschickungsöffnung (5) zu verhindern.

2. Verfahren nach Anspruch 1, **dadurch gekennzeichnet, dass** das (Co)polymer unter einer Schutzgasatmosphäre in der Beschickungsöffnung (5) zugegeben wird.

3. Verfahren nach mindestens einem der vorhergehenden Ansprüche, **dadurch gekennzeichnet, dass** der Radikalbildner, wobei dieser vorzugsweise ein Peroxid ist, im ersten Extrusionsabschnitt (21) über die Beschickungsöffnung (5) und/oder über ein Radikalbildnerzugabemittel (11) zugegeben wird.

4. Verfahren nach mindestens einem der vorhergehenden Ansprüche, **dadurch gekennzeichnet, dass** das erste degradierte (Co)polymer beim Eintritt in den zweiten Extrusionsabschnitt (22) einen Restanteil an Radikalbildnern aufweist, der, bezogen auf die Gesamtmenge des ersten degradierten (Co)polymers, kleiner ist als 0,01 Gew.-%.

5. Verfahren nach mindestens einem der vorhergehenden Ansprüche, **dadurch gekennzeichnet, dass** die Degradierung des (Co)polymers im ersten Extrusionsabschnitt (21) bei einer Temperatur von 100°C bis 320°C durchgeführt wird, und wobei vorzugsweise die weitere Degradierung des ersten degradierten (Co)polymers im zweiten Extrusionsabschnitt (22) bei einer Temperatur von 200°C bis 450°C durchgeführt wird.

6. Verfahren nach mindestens einem der vorhergehenden Ansprüche, **dadurch gekennzeichnet, dass** das zugeführte Sauerstoffgas reiner Sauerstoff oder ein sauerstoffhaltiges Gasgemisch ist, wobei das genannte Gasgemisch einen Sauerstoffanteil von mindestens 5 Vol.-% aufweist; und
wobei das zugeführte Sauerstoffgas vorzugweise mindestens eine zu einer Pfropfungsreaktion befähigte reaktive Komponente enthält.

7. Verfahren nach mindestens einem der vorhergehenden Ansprüche, **dadurch gekennzeichnet, dass** das Sauerstoffgas vor der Zugabe mindestens eine Temperatur von 50°C aufweist, und vorzugsweise das Sauerstoffgas mit einem Druck von mindestens 5 bar zugegeben wird.

8. Verfahren nach mindestens einem der vorhergehenden Ansprüche, **dadurch gekennzeichnet, dass** das zweite degradierte (Co)polymer in einen weiteren Extrusionsabschnitt (28) überführt wird, wobei der zweite Extrusionsabschnitt (22) von dem weiteren Extrusionsabschnitt (28) durch ein Dichtmittel (18, 19, 20) abgetrennt ist und der weitere Extrusionsabschnitt (28) eine zusätzliche Beschickungsöffnung (24) und/oder Zuführöffnung (25) aufweist.

9. Verfahren nach einem der vorhergehenden Ansprüche, **dadurch gekennzeichnet, dass** das Dichtmittel (14, 15, 16, 17, 18, 19, 20) durch ein Rückförderungselement und/oder Staustufe in der Extruderschnecke (8) gebildet wird.

10. Verfahren nach mindestens einem der vorhergehenden Ansprüche, **dadurch gekennzeichnet, dass** der zweite und/oder weitere Extrusionsabschnitt (22, 28) ein in Extrusionsrichtung (27) hinter der Zuführöffnung (5 ,24) angeordnetes Abbaumittel (13, 26) zum Abbauen des Sauerstoffgases aufweist.

11. Verfahren nach mindestens einem der vorhergehenden Ansprüche, **dadurch gekennzeichnet, dass** das zweite degradierte (Co)polymer nach Verlassen des zweiten oder des weiteren Extrusionsabschnittes (22, 28) in ein Schüttgut transformiert wird.

12. Extruder (1) zur Degradierung von (Co)polymeren umfassend:
- einen Extrusionsraum (3) enthaltend mindestens zwei Extrusionsabschnitte (21, 22);
- eine Beschickungsöffnung (5) zur Beschickung des ersten Extrusionsabschnittes (21) mit zumindest einem (Co)polymer;
- gegebenenfalls ein Radikalbildnerzugabemittel (11, 5) zur Zugabe eines Radikalbildners in den ersten Extrusionsabschnitt (21);
- eine Zuführöffnung (12) zur Zugabe eines Sauerstoffgases in den zweiten Extrusionsabschnitt (22) ;
- ein den ersten Extrusionsabschnitt (21) vom zweiten Extrusionsabschnitt (22) trennendes Dichtmittel (14, 15, 16, 17), das zwischen der Beschickungsöffnung (5) und der Zuführöffnung (12) vorgesehen ist, wobei das Dichtmittel (14, 15, 16, 17), geeignet ist, das Entweichen des zugeführten Sauerstoffgases aus der Beschickungsöffnung (5) zu verhindern; und
- gegebenenfalls ein in Extrusionsrichtung (27) gesehen hinter der Zuführöffnung (12) angeordnetes Abbaumittel (13) zum Abbauen des Sauerstoffgases.

13. Extruder (1) nach Anspruch 12, **dadurch gekennzeichnet, dass** als Dichtmittel (14, 15, 16, 17), ein Rückförderungselement und/oder eine Staustufe zum Einsatz kommt.

14. Extruder (1) nach einem der Ansprüche 12 oder 13, **dadurch gekennzeichnet, dass** als Abbaumittel (13) ein Vakuum oder eine Rückentgasungsstufe zum Einsatz kommt.

15. Extruder (1) nach einem der Ansprüche 12 bis 14, **dadurch gekennzeichnet, dass** das Radikalbildnerzugabemittel (11) zur Zugabe eines Radikalbildners in den Extrusionsraum (3) in Extrusionsrichtung (27) hinter der Beschickungsöffnung (5) angeordnet ist.

16. Extruder (1) nach einem der Ansprüche 12 bis 15 **dadurch gekennzeichnet, dass** ein zweites Dichtmittel (18, 19, 20) zur Bereitstellung einer weiteren Abdichtungsmöglichkeit in Extrusionsrichtung (27) gesehen hinter dem Abbaumittel (13) angeordnet ist.

## Claims

1. A method for degrading (co)polymers in an extruder (1), comprising the steps of:
a) supplying a (co)polymer into a first extrusion portion (21) of the extruder (1) by means of a feed opening (5);
b) degrading the (co)polymer under shear stress in the first extrusion portion (21) in the presence of at least one radical former in order to produce a first degraded (co)polymer;
c) transferring the first degraded (co)polymer from the first extrusion portion (21) into a second extrusion portion (22) of the extruder (1), wherein the first extrusion portion (21) is separated from the second extrusion portion (22) by a sealing means (14, 15, 16, 17);
d) supplying oxygen gas into the second extrusion portion (22) by means of a supply opening (12), wherein the supply opening (12) is arranged behind the sealing means (14, 15, 16, 17) in the extrusion direction (27); and
e) further degrading the first degraded copolymer under shear stress in the second extrusion portion (22) in the presence of an oxygen gas in order to produce a second degraded (co)polymer;
with the proviso that the sealing means (14, 15, 16, 17) is suitable for preventing the oxygen gas from escaping out of the feed opening (5).

2. The method according to claim 1, **characterized in that** the (co)polymer is added under a protective gas atmosphere in the feed opening (5).

3. The method according to at least one of the preceding claims, **characterized in that** the radical former, said radical former preferably being a peroxide, is added in the first extrusion portion (21) via the feed opening (5) and/or via a radical former addition means (11).

4. The method according to at least one of the preceding claims, **characterized in that**, upon entry into the second extrusion portion (22), the first degraded (co)polymer has a residual proportion of radical formers that, based on the total amount of the first degraded (co)polymer, is less than 0.01 wt.%.

5. The method according to at least one of the preceding claims, **characterized in that** the (co)polymer is degraded in the first extrusion portion (21) at a temperature of from 100 °C to 320 °C, and the first degraded (co)polymer preferably being further degraded in the second extrusion portion (22) at a temperature of 200 °C to 450 °C.

6. The method according to at least one of the preceding claims, **characterized in that** the supplied oxygen gas is pure oxygen or an oxygen-containing gas mixture, said gas mixture having an oxygen proportion of at least 5 vol.%; and
the supplied oxygen gas preferably containing at least one reactive component which is capable of a grafting reaction.

7. The method according to at least one of the preceding claims, **characterized in that** prior to the addition the oxygen gas has at least a temperature of 50 °C, and the oxygen gas preferably being added at a pressure of at least 5 bar.

8. The method according to at least one of the preceding claims, **characterized in that** the second degraded (co)polymer is transferred into a further extrusion portion (28), the second extrusion portion (22) being separated from the further extrusion portion (28) by a sealing means (18, 19, 20) and the further extrusion portion (28) having an additional feed opening (24) and/or supply opening (25).

9. The method according to one of the preceding claims, **characterized in that** the sealing means (14, 15, 16, 17, 18, 19, 20) is formed by a return element and/or damming stage in the extruder screw (8).

10. The method according to at least one of the preceding claims, **characterized in that** the second and/or further extrusion portion (22, 28) has a decomposition means (13, 26) for decomposing the oxygen gas, which decomposition means is arranged behind the supply opening (5, 24) in the extrusion direction (27).

11. The method according to at least one of the preceding claims, **characterized in that** the second degraded (co)polymer is transformed into a bulk material after leaving the second or the further extrusion portion (22, 28).

12. An extruder (1) for degrading (co)polymers, comprising:
- an extrusion chamber (3) containing at least two extrusion portions (21, 22);
- a feed opening (5) for feeding the first extrusion portion (21) with at least one (co)polymer;
- optionally a radical former addition means (11, 5) for adding a radical former into the first extrusion portion (21);
- a supply opening (12) for adding an oxygen gas into the second extrusion portion (22);
- a sealing means (14, 15, 16, 17) which separates the first extrusion portion (21) from the second extrusion portion (22) and is provided between the feed opening (5) and the supply opening (12), wherein the sealing means (14, 15, 16, 17) is suitable for preventing the supplied oxygen gas from escaping out of the feed opening (5); and
- optionally a decomposition means (13) for decomposing the oxygen gas, which decomposition means is arranged behind the supply opening (12) as seen in the extrusion direction (27).

13. The extruder (1) according to claim 12, **characterized in that** a return element and/or a damming stage is used as the sealing means (14, 15,16, 17).

14. The extruder (1) according to one of claims 12 or 13, **characterized in that** a vacuum or a return degassing stage is used as the decomposition means (13).

15. The extruder (1) according to one of claims 12 to 14, **characterized in that** the radical former addition means (11) for adding a radical former into the extrusion chamber (3) is arranged behind the feed opening (5) in the extrusion direction (27).

16. The extruder (1) according to one of claims 12 to 15, **characterized in that** a second sealing means (18, 19, 20) for providing a further sealing possibility is arranged behind the decomposition means (13) as seen in the extrusion direction (27).

## Revendications

1. Procédé pour la dégradation de (co)polymères dans une extrudeuse (1), comprenant les étapes :
a) d'introduction d'un (co)polymère dans une première section d'extrusion (21) de l'extrudeuse (1) par l'intermédiaire d'une ouverture de chargement (5) ;
b) de dégradation du (co)polymère sous contrainte de cisaillement dans la première section d'extrusion (21) en présence d'au moins un formateur de radicaux pour produire un premier (co)polymère dégradé ;
c) de transfert du premier (co)polymère dégradé de la première section d'extrusion (21) à une seconde section d'extrusion (22) de l'extrudeuse (1), la première section d'extrusion (21) étant séparée de la seconde section d'extrusion (22) par un moyen d'étanchéité (14, 15, 16, 17) ;
d) d'introduction de gaz d'oxygène dans la seconde section d'extrusion (22) par l'intermédiaire d'une ouverture d'alimentation (12), ladite ouverture d'alimentation (12) étant disposée dans la direction d'extrusion (27) derrière le moyen d'étanchéité (14, 15, 16, 17) ; et
e) de dégradation supplémentaire du premier copolymère dégradé sous contrainte de cisaillement dans la seconde section d'extrusion (22) en présence d'un gaz d'oxygène pour produire un second (co)polymère dégradé ;
à condition que le moyen d'étanchéité (14, 15, 16, 17) soit adapté pour empêcher l'échappement du gaz d'oxygène de l'ouverture de chargement (5).

2. Procédé selon la revendication 1, **caractérisé en ce que** le (co)polymère est ajouté dans l'ouverture de chargement (5) sous une atmosphère de gaz de protection.

3. Procédé selon au moins l'une des revendications précédentes, **caractérisé en ce que** le formateur de radicaux, de préférence un peroxyde, est ajouté dans la première section d'extrusion (21) par l'intermédiaire de l'ouverture de chargement (5) et/ou par un moyen d'ajout de formateur de radicaux (11).

4. Procédé selon au moins l'une des revendications précédentes, **caractérisé en ce que** le premier (co)polymère dégradé, à son entrée dans la seconde section d'extrusion (22), présente une proportion résiduelle de formateur de radicaux qui, par rapport à la quantité totale du premier (co)polymère dégradé, est inférieure à 0,01 % en poids.

5. Procédé selon au moins l'une des revendications précédentes, **caractérisé en ce que** la dégradation du (co)polymère dans la première section d'extrusion (21) est effectuée à une température de 100 à 320 °C, et dans lequel la dégradation supplémentaire du (co)polymère dégradé dans la seconde section d'extrusion (22) est de préférence effectuée à une température de 200 à 450 °C.

6. Procédé selon au moins l'une des revendications précédentes, **caractérisé en ce que** le gaz d'oxygène introduit est de l'oxygène pur ou un mélange gazeux contenant de l'oxygène, ledit mélange gazeux présentant une teneur en oxygène d'au moins 5 % en volume ; et le gaz d'oxygène introduit contenant de préférence au moins un composant réactif capable de subir une réaction de greffage.

7. Procédé selon au moins l'une des revendications précédentes, **caractérisé en ce que** le gaz d'oxygène présente au moins une température de 50 °C avant l'ajout, et de préférence le gaz d'oxygène est ajouté à une pression d'au moins 5 bars.

8. Procédé selon au moins l'une des revendications précédentes, **caractérisé en ce que** le second (co)polymère dégradé est transféré dans une autre section d'extrusion (28), la seconde section d'extrusion (22) étant séparée de l'autre section d'extrusion (28) par un moyen d'étanchéité (18, 19, 20) et l'autre section d'extrusion (28) comportant une ouverture de chargement (24) et/ou une ouverture d'alimentation (25) supplémentaire.

9. Procédé selon l'une des revendications précédentes, **caractérisé en ce que** le moyen d'étanchéité (14, 15, 16, 17, 18, 19, 20) est formé par un élément de récupération et/ou un étage de retenue dans la vis d'extrudeuse (8).

10. Procédé selon au moins l'une des revendications précédentes, **caractérisé en ce que** la seconde section d'extrusion et/ou une autre section d'extrusion (22, 28) comporte un agent de désintégration (13, 26) disposé derrière l'ouverture d'alimentation (5, 24) dans la direction d'extrusion (27) pour dégrader le gaz d'oxygène.

11. Procédé selon au moins l'une des revendications précédentes, **caractérisé en ce que** le second (co)polymère dégradé, après avoir quitté la seconde ou l'autre section d'extrusion (22, 28), est transformé en un matériau en vrac.

12. Extrudeuse (1) pour la dégradation de (co)polymères, comprenant :
- une chambre d'extrusion (3) comportant au moins deux sections d'extrusion (21, 22) ;
- une ouverture de chargement (5) pour le chargement de la première section d'extrusion (21) d'au moins un (co)polymère ;
- éventuellement un moyen d'ajout de formateur de radicaux (11, 5) pour l'ajout d'un formateur de radicaux à la première section d'extrusion (21) ;
- une ouverture d'alimentation (12) pour l'ajout du gaz d'oxygène dans la seconde section d'extrusion (22) ;
- un moyen d'étanchéité (14, 15, 16, 17) séparant la première section d'extrusion (21) de la seconde section d'extrusion (22), lequel moyen d'étanchéité est prévu entre l'ouverture de chargement (5) et l'ouverture d'alimentation (12), le moyen d'étanchéité (14, 15, 16, 17) étant adapté pour empêcher l'échappement du gaz d'oxygène de l'ouverture de chargement (5) ; et
- éventuellement un agent de désintégration (13) disposé en aval de l'ouverture d'alimentation (12) dans la direction d'extrusion (27) pour dégrader le gaz d'oxygène.

13. Extrudeuse (1) selon la revendication 12, **caractérisée en ce qu'**un élément de récupération et/ou un étage de retenue est utilisé comme moyen d'étanchéité (14, 15, 16, 17).

14. Extrudeuse (1) selon l'une des revendications 12 ou 13, **caractérisée en ce qu'**un vide ou un étage de dégazage arrière est utilisé comme agent de désintégration (13).

15. Extrudeuse (1) selon l'une des revendications 12 à 14, **caractérisée en ce que** le moyen d'ajout de formateur de radicaux (11) pour l'ajout d'un formateur de radicaux dans la chambre d'extrusion (3) est disposé dans la direction d'extrusion (27) derrière l'ouverture d'alimentation (5).

16. Extrudeuse (1) selon l'une des revendications 12 à 15, **caractérisée en ce qu'**un second moyen d'étanchéité (18, 19, 20) est disposé derrière l'agent de désintégration (13) dans la direction d'extrusion (27) afin de fournir une possibilité d'étanchéité supplémentaire.
